# EUROPEAN PATENT SPECIFICATION

(11) **EP 4 239 978 B1**
(45) Date of publication and mention of the grant of the patent: **01.05.2024**
(21) Application number: 22160201.4
(22) Date of filing: 04.03.2022
(51) Int. Cl.: H04L 65/80, G08G 5/00, H04W 24/04, H04W 36/16

(54) **AIR TRAFFIC CONTROL SYSTEM AND METHOD OF PERFORMING A SWITCHOVER**
FLUGSICHERUNGSSYSTEM UND VERFAHREN ZUR DURCHFÜHRUNG EINER UMSCHALTUNG
SYSTÈME DE CONTRÔLE DU TRAFIC AÉRIEN ET PROCÉDÉ D'EXÉCUTION D'UNE COMMUTATION

(43) Date of publication of application: 06.09.2023
(73) Proprietor: Rohde & Schwarz GmbH & Co. KG, 81671 München (DE)
(72) Inventor: Pfeifer, Hagen, 81671 München (DE); Brueninghaus, Frank, 81671 München (DE); Doerler, Constantin, 81671 München (DE)
(74) Representative: Novagraaf Group

(56) References cited:
- EP-A1- 3 908 030

## Description

The invention relates to an air traffic control (ATC) system with improved switchover characteristics. Further, the invention relates to a method of performing a switchover between at least two air traffic control (ATC) radios of a failover group in case of failure by using an air traffic control (ATC) system.

In the state of the art, air traffic control (ATC) systems are known that comprise two or more air traffic control (ATC) radios, wherein at least of these ATC radios is a main radio and at least another one is a backup radio, also called auxiliary radio. In case of failure of the main radio, the auxiliary or rather backup radio is activated in order to receive voice signals transmitted instead of the main radio, thereby ensuring a continuous voice signal transmission. The respective voice signals may be received from a pilot or anyone else communicating with the ATC system.

In general, this is ensured by performing a switchover from the main radio to the backup radio in case of failure of the main radio. Typically, the switchover is done in a relatively short time since both radios are synchronized with each other, thereby ensuring that the respective radios are in an identical state. However, this synchronization does not comprise sharing of data associated with the voice signals.

Typically, the ATC radios each comprise a buffer that is used to buffer data associated with the voice signals received, for instance for de-jittering of the voice signals. In case of failure, the recently activated ATC radio, namely the backup radio, has to fill up its buffer first prior to further processing the data associated with the voice signals received. Accordingly, the switchover from the main radio to the backup radio is completed once the backup radio has filled its buffer capacity.

Generally, the buffer is used as effects occur during synchronization when switching to the backup radio, which is why the buffer must be filled so that the normal de-jitter characteristics are maintained. In fact, fluctuations in the delay of the packet runtimes shall be compensated by using the buffer.

The synchronization and the buffering already ensure that the switchover can take place in a relative fast manner while simultaneously ensuring good quality due to the de-jittering. However, additional latency occurs due to systemic switching time, e.g. re-configuration of a firewall, re-routing by means of a routing sub-system and further aspects. Thus, the entire latency during a switchover comprises several sources, wherein the switchover time shall be reduced as much as possible while still ensuring satisfying quality of the voice signal transmission.

EP 3908030 describes a radio system for air traffic control (ATC) that comprises at least one main radio, at least one standby radio and at least one voice communication system radio system. The radio system has a default operation mode in which the main radio is active and the standby radio is inactive. The voice communication system is configured to monitor the status of the main radio and to monitor the status of the standby radio. The voice communication system is configured to receive a failure report in case of a failure associated with the main radio. The voice communication system is configured to activate the inactive standby radio automatically.

Accordingly, there is a need for an air traffic control system as well as a method of performing a switchover which ensure improved switchover characteristics.

The invention provides an air traffic control system with improved switchover characteristics. The air traffic control system comprises at least two air traffic control radios, wherein the at least two air traffic control radios comprise a main radio and a backup radio such that the at least two air traffic control radios establish a failover group. The air traffic control system comprises a voice data buffer that is configured to buffer data associated with voice signals received. The voice data buffer has an overall buffer capacity and an initial buffer capacity being a portion of the overall buffer capacity. The air traffic control system is configured to initiate a switchover from the main radio to the backup radio in case of failure of the main radio. The switchover from the main radio to the backup radio is completed when the initial buffer capacity of the voice data buffer is filled.

The invention also provides a method of performing a switchover between at least two air traffic control radios of a failover group in case of failure by using an air traffic control system, particularly an air traffic control system as described. The method comprises the steps of:
- initiating a switchover from a main radio to a backup radio in case of failure of the main radio,
- filling a voice data buffer with voice data up to an initial buffer capacity that is a portion of an overall buffer capacity of the voice data buffer, and
- completing the switchover when the initial buffer capacity of the voice data buffer has been filled.

The invention is based on the finding that the switchover characteristics of the air traffic control (ATC) system as well as the method of performing the switchover can be improved by using only a certain portion of the overall capacity of the voice data buffer in order to ensure that the switchover is completed in a faster manner compared to systems and methods known in the state of the art. Since the switchover is completed prior to filling the entire buffer capacity of the voice data buffer, the quality of the voice signals transmitted may be reduced at the beginning of the processing by means of the recently activated ATC radio, namely the backup radio. Particularly, the quality may be reduced in comparison to solutions known which require to fill up the entire buffer capacity, thereby ensuring best quality of the voice signal transmission from the beginning. However, the switchover is completed significantly faster such that no or a significantly reduced latency occur for compensating jitter effects in the voice signal transmission. The respective reduction of quality may concern the jitter effects that may cause interruptions or rather breaks in the communication that however have a lower impact on the overall communication quality, particularly in case of a voice signal transmission with low jitter

In fact, the invention ensures that the voice signals can be processed further by the backup radio recently activated with a significantly reduced latency when performing the switchover from the main radio to the backup radio.

Generally, the voice data buffer is configured to buffer voice samples, namely the data associated with the voice signals received from a pilot or anyone else communicating with the ATC system. The respective data may relate to real-time transport protocol (RTP) frames and/or voice over internet protocol (VoIP) frames that are used in modern air traffic control communication systems.

The main idea of the invention relates to splitting the entire buffer capacity of the voice data buffer into the initial buffer capacity and a remaining buffer capacity. The initial buffer capacity that is smaller compared to the entire buffer capacity is used for the switchover since the switchover is completed once the initial buffer capacity is filled.

The remaining buffer capacity may be filled during operation of the backup radio after completion of the switchover, wherein the quality may be reduced during filling up the remaining buffer capacity.

Generally, the voice data buffer is configured to buffer the respective data for compensating jitter effects in the voice signal transmission.

The respective voice data buffer may be associated with the backup radio, namely the ATC radio that is activated when the switchover is performed. Particularly, the voice data buffer is part of the backup radio, e.g. an internal voice data buffer.

An aspect provides that the air traffic control system is configured to individually set the initial buffer capacity. Hence, an operator of the air traffic control system may individually and/or manually set the initial buffer capacity so as to define the portion of the overall buffer capacity that has to be filled in order to meet the requirement of filling the initial buffer capacity. Of course, the initial buffer capacity is lower than the overall buffer capacity of the voice data buffer. Accordingly, a trade-off between a fast switchover with potential reduction in quality and a longer switchover time with higher robustness against jitter effects (better quality after switchover) can be set, which however may depend on the jitter of the voice signal transmission. In other words, the operator may set the initial buffer capacity in a different manner in case the operator recognizes that high or rather low jitter occur in the voice signal transmission.

Moreover, the air traffic control system may be configured to fill a remaining buffer capacity after the completion of the switchover. In other words, a remaining buffer capacity of the voice data buffer is filled after the completion of the switchover when receiving voice signals via the backup radio. As mentioned above, the remaining buffer capacity corresponds to the remaining part of the overall buffer capacity that is not associated with the initial buffer capacity. In other words, the overall buffer capacity may be filled, wherein the first part, namely the initial buffer capacity, is filled during an offline accumulation phase during which the backup radio may not process further any data or rather signals received, whereas the remaining buffer capacity is filled during operation of the backup radio, namely during an online accumulation phase. In other words, the entire buffering is decoupled into two separate phases, namely an initial buffering phase that is associated with the initial buffer capacity as well as a longer buffering phase that is called online accumulation phase which is used for continuously buffering the voice signals.

During the online accumulation phase, interruptions, breaks and/or reduction in quality may occur due to partially filled voice data buffer and/or the simultaneous buffering, namely filling up the remaining part of the entire buffer capacity.

Another aspect provides that the air traffic control system is configured to fill the remaining buffer capacity during silence. The voice data buffer used for compensating jitter effects is completely filled in time periods during which no communication takes place, e.g. during which no voice signals are received. Those time periods are called silence, as no voice signals are received.

According to another aspect, the air traffic control system is configured to remain the voice data buffer in its state after the initial buffer capacity of the voice data buffer was filled. Put differently, the voice data buffer remains in its state after the initial buffer capacity of the voice data buffer was filled. Accordingly, the overall buffer capacity is not used for compensating any jitter in the voice signal transmission. For instance, the air traffic control system has identified that the respective voice signal transmissions are very short such that it is not necessary to fill up the entire voice data buffer for compensating any jitter effects in the voice signal transmission due to the very short duration of the voice signal transmissions.

The air traffic control system may be configured to accumulate less than five voice samples in an offline accumulation phase during which the initial buffer capacity is filled. Put differently, less than five voice samples are accumulated in an offline accumulation phase during which the initial buffer capacity is filled. As mentioned above, the offline accumulation phase corresponds to the time duration during which the initial buffer capacity is filled in order to realize the switchover in a fast manner. The respective duration may correspond to the time required for accumulating five voice samples.

Generally, each of the air traffic control radios may comprise a voice data buffer. Since each of the air traffic control radios may be used for receiving the voice signals, each of them may have a voice data buffer.

As mentioned above, the voice data buffer may relate to the one of the backup radio that is filled in case of the switchover, particularly the switchover from the main radio to the backup radio.

In addition, a synchronization link may be established between the at least two air traffic control radios for forwarding synchronization data from the main radio to the backup radio. The synchronization data may correspond to meta data that is synchronized, for instance session initiation protocol (SIP) packets and/or real-time transport protocol (RTP) packets. The respective synchronization link ensures that both radios are synchronized with each other such that they are in an identical state. However, data associated with voice signals are not exchanged or rather synchronized during the synchronization of the at least two ATC radios.

Furthermore, a jitter of the voice signal transmission may be measured. The switchover is completed when, in case the jitter measured is below a predefined threshold value, the initial buffer capacity of the voice data buffer has been filled and, in case the jitter measured is above the predefined threshold value, the overall buffer capacity of the voice data buffer has been filled. Hence, the ATC system may comprise two different operation modes, wherein one of the two different operation modes, e.g. the one associated with high jitter, corresponds to the regular method known, whereas the other operation mode, e.g. the one associated with low jitter, corresponds to the inventive method ensuring improved switchover characteristics. The respective operation mode may be selected/chosen automatically based on the jitter measured.

The system as well as the method each decouple the necessary buffering for compensation of jitter effects into two phases, namely an initial buffering phase, also called offline buffering phase, and a longer accumulation phase, also called online accumulation phase.

During the initial buffering phase, a defined number of VoIP/RTP frames is buffered, whereby a potential jitter can only be compensated for to a very small extent during this phase. For instance, the defined number corresponds to five. Hence, the initial buffering phase differs from known methods in that only extremely few samples, e.g. the defined number of frames, are accumulated in this phase and that a switchover is already completed after accumulating this defined number of frames.

The longer accumulation phase, namely the online accumulation phase, ensures continuous buffering of the VoIP/RTP stream, e.g. after completion of the switchover. During this time, breaks, interruptions and/or quality degradation may occur.

Generally, the invention ensures that the latency is reduced in case of switchover due to a failure of the main radio. This can be ensued due to the two-step approach, as the buffer used for de-jittering is not built up as usual at the switchover time. Instead, an adaptive concept initially builds up only a minimum of the buffer capacity, namely the initial buffer capacity, which ensures de-jittering, while the regular buffer capacity, e.g. the entire buffer capacity, is built up during the voice signal transmission, namely the ongoing SIP/RTP connection during operation after the switchover.

Further aspects and many of the attendant advantages of the claimed subject matter will become more readily appreciated as the same become better understood by reference to the following description, when taken in conjunction with the accompanying drawings. In the drawings,
- Figure 1 schematically shows an overview of an air traffic control system according to the invention, and
- Figure 2 shows a diagram illustrating the improved switchover compared to a switchover known from the state of the art.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

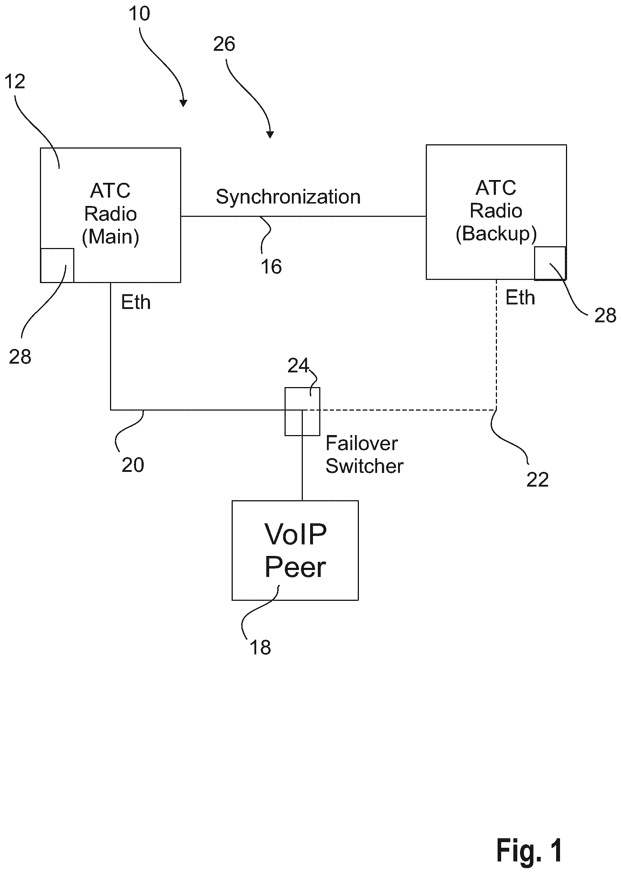

In Figure 1, an air traffic control (ATC) system 10 is shown that comprises at least two air traffic control (ATC) radios 12, 14, namely a main radio 12 and a backup radio 14.

The main radio 12 and the backup radio 14 are connected with each other by means of a synchronization link 16 that is established between both ATC radios 12, 14 such that synchronization data can be forwarded from the main radio 12 to the backup radio 14 or vice versa.

In the shown embodiment, the air traffic control radios 12, 14 are established as Voice over Internet Protocol (VoIP) radios that are connected with a VoIP peer 18 via lines 20, 22, for instance internet protocol cables, e.g. Ethernet cables.

In addition, a failover switching member 24 is located between the air traffic control radios 12, 14 and the voice over IP peer 18. The failover switching member 24 is part of a re-routing sub-system for routing IP packets in the air traffic control system 10.

In general, the air traffic control radios 12, 14 together establish a failover group 26 as the main radio 12 and the backup radio 14 synchronize each other by means of synchronization data exchanged such that both radios 12, 14 are in an identical status.

The air traffic control system 10 further comprises at least one voice data buffer 28 that is generally configured to buffer data associated with voice signals received by the respective air traffic control radios 12, 14, e.g. during operation of the respective ATC radio 12, 14. In fact, each of the air traffic control radios 12, 14 has its own voice data buffer 28 as shown in Figure 1.

In case the air traffic control system 10 identifies a failure of the main radio 12, a switchover is initiated which means that the ongoing voice signal reception is switched over from the main radio 12 to the backup radio 14. The switchover corresponds to a re-routing of the IP traffic by means of the failover switching member 24 that is controlled accordingly such that the backup radio 14 is connected with the VoIP peer 18.

Generally, the switchover has to be done as fast as possible. For this reason, the synchronization link 16 ensures that both ATC radios 12, 14 are already in an identical state when the switchover is initiated.

After initiation of the switchover, the backup radio 14 receives data associated with voice signals received, for instance via an antenna connected with the backup radio 14.

The data is forwarded to the internal voice data buffer 28 of the backup radio 14 that is filled at the beginning so as to accumulate data used for compensating any jitter effects in the voice signal transmission.

Typically, the voice data buffer 28 has an overall buffer capacity that is defined by the respective air traffic control (ATC) standard, for instance 500 ms. However, the voice data buffer 28 also has an initial buffer capacity that is only a portion of the overall buffer capacity, for instance a capacity associated with 10 ms.

The initial buffer capacity is already sufficient for completing the switchover from the main radio 12 to the backup radio 14 such that the data associated with the voice signals can already be processed further even though the quality might be impaired.

Accordingly, the switchover from the main radio 12 to the backup radio 14 is completed when the initial buffer capacity of the voice data buffer 28 is filled. Hence, the time required for completing the switchover is reduced significantly, as in the example mentioned above only 10 ms instead of 500 ms have to be buffered.

In general, the respective initial buffer capacity may be set individually by an operator of the air traffic control system 10 such that the operator can shift the respective boundary manually and/or individually.

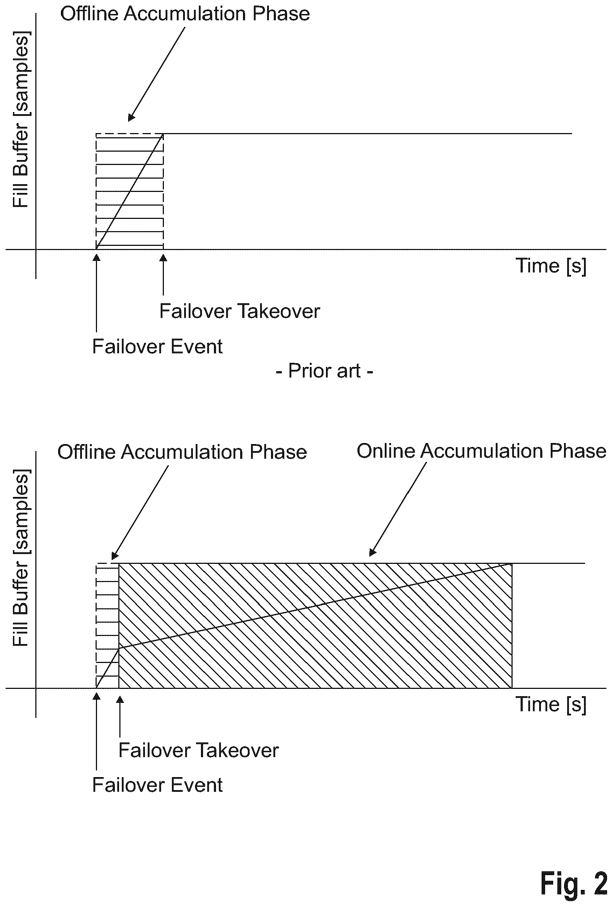

In Figure 2, the respective behavior associated with the inventive concept is shown in comparison to a switchover procedure known in the state of the art.

The overall buffer capacity is similar in both examples given such that these concepts can be compared with each other.

In the state of the art, the switchover is initiated once the failure of the main radio 12 is detected which is labeled in Figure 2 as "Failover Event", e.g. the time of the failure.

In the techniques known in the state of the art, the voice data buffer is filled up to its overall buffer capacity during a so-called offline accumulation phase. Once the overall buffer capacity has been filled, the switchover has been completed in the techniques known in the state of the art, which is labeled in Figure 2 as "Failover Takeover", namely the completion of the switchover.

In contrast to the technique according to the state of the art, the inventive procedure splits the entire buffering into two phases, namely a significantly shorter offline accumulation phase as well as a subsequent online accumulation phase.

The switchover from the main radio 12 to the backup radio 14, e.g. until reaching "Failover Takeover", is already completed after the initial buffer capacity has been filled, namely after completion of the offline accumulation phase.

As shown in Figure 2, the time duration required for the completion of the switchover, namely reaching "Failover Takeover", is significantly reduced in comparison to the prior art. In the shown embodiment, less than five voice samples are accumulated in the offline accumulation phase during which the initial buffer capacity is filled.

However, the faster completion of the switchover comes together with a reduction of quality after the offline accumulation phase, as voice signals are already processed by the backup radio 14 during the online accumulation phase, but with a reduced quality potentially.

Moreover, Figure 2 also shows that the time duration required for filling up the entire buffer capacity is longer in the inventive concept compared to the techniques known in the state of the art. Accordingly, several disadvantages like potentially lower quality after switchover as well as a longer duration until when the entire buffer capacity is filled up are accepted in order to obtain the faster completion of the switchover.

Generally, a remaining buffer capacity of the voice data buffer 28, e.g. 490 ms, may be filled up after the completion of the switchover up to the overall buffer capacity.

Particularly, this is done during silence, namely during time periods in which no voice signals are received. This ensures that the quality of the voice signal transmission is improved even though the buffer capacity of the voice data buffer 28 is only partially filled.

However, a certain scenario may also concern voice signal transmissions for very short time periods, wherein it is not necessary to fill up the remaining buffer capacity due to the very short voice signal transmissions. In this scenario, the voice data buffer 28 may remain in its state which is obtained after the offline accumulation phase, e.g. after the initial buffer capacity of the voice data buffer was filled.

In general, the air traffic control system 10 may be configured to measure a jitter of the voice signal transmission, wherein the jitter measured is compared with a pre-defined threshold value. In case the jitter measured is below the pre-defined threshold value, the switchover is completed when the initial buffer capacity of the voice data buffer has been filled as discussed above. However, the switchover may also be completed in case the jitter measured is above the pre-defined threshold value only in case the overall buffer capacity of the voice data buffer has been filled.

Therefore, the voice signal transmission is measured first in order to verify whether the voice signal transmission has a high or a low jitter impact.

Generally, depending on the outcome of the measurement, the respective trade-off between fast switchover and high quality or rather high robustness against potential jitter effects is shifted. In case the voice signal transmission is impaired by high jitter, a larger portion of the overall buffer capacity has to be filled first before the switchover can be completed.

In any case, the switchover characteristics are improved, as fast switchover can be ensured, particularly in cases of voice signal transmission having low jitter.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An air traffic control system with improved switchover characteristics, wherein the air traffic control system (10) comprises at least two air traffic control radios (12, 14), wherein the at least two air traffic control radios (12, 14) comprise a main radio (12) and a backup radio (14) such that the at least two air traffic control radios (12, 14) establish a failover group (26), and wherein the air traffic control system (10) comprises a voice data buffer (28) that is configured to buffer data associated with voice signals received, **characterized in that** the voice data buffer (28) has an overall buffer capacity and an initial buffer capacity being a portion of the overall buffer capacity, wherein the air traffic control system (10) is configured to initiate a switchover from the main radio (12) to the backup radio (14) in case of failure of the main radio (12), and wherein the switchover from the main radio (12) to the backup radio (14) is completed when the initial buffer capacity of the voice data buffer (28) is filled.

2. The air traffic control system according to claim 1, wherein the air traffic control system (10) is configured to individually set the initial buffer capacity.

3. The air traffic control system according to claim 1 or 2, wherein the air traffic control system (10) is configured to fill a remaining buffer capacity after the completion of the switchover.

4. The air traffic control system according to claim 3, wherein the air traffic control system (10) is configured to fill the remaining buffer capacity during silence.

5. The air traffic control system according to any of the preceding claims, wherein the air traffic control system (10) is configured to remain the voice data buffer (28) in its state after the initial buffer capacity of the voice data buffer (28) was filled.

6. The air traffic control system according to any of the preceding claims, wherein the air traffic control system (10) is configured to accumulate less than five voice samples in an offline accumulation phase during which the initial buffer capacity is filled.

7. The air traffic control system according to any of the preceding claims, wherein each of the air traffic control radios (12, 14) comprises a voice data buffer (28).

8. The air traffic control system according to any of the preceding claims, wherein a synchronization link (16) is established between the at least two air traffic control radios (12, 14) for forwarding synchronization data from the main radio (12) to the backup radio (14), in particular wherein the synchronization data corresponds to meta data that is synchronized, e.g. session initiation protocol (SIP) packets and/or real-time transport protocol (RTP) packets.

9. A method of performing a switchover between at least two air traffic control radios (12, 14) of a failover group (26) in case of failure by using an air traffic control system (10), wherein the method comprises the steps of:
- Initiating a switchover from a main radio (12) to a backup radio (14) in case of failure of the main radio (12),
- Filling a voice data buffer (28) with voice data up to an initial buffer capacity that is a portion of an overall buffer capacity of the voice data buffer (28), and
- Completing the switchover when the initial buffer capacity of the voice data buffer (28) has been filled.

10. The method according to claim 9, wherein a remaining buffer capacity of the voice data buffer (28) is filled after the completion of the switchover when receiving voice signals via the backup radio (14).

11. The method according to claim 9 or 10, wherein the remaining buffer capacity is filled during silence.

12. The method according to any of claims 9 to 11, wherein the voice data buffer (28) remains in its state after the initial buffer capacity of the voice data buffer (28) was filled.

13. The method according to any of claims 9 to 12, wherein the initial buffer capacity is set individually by an operator of the air traffic control system (10).

14. The method according to any of claims 9 to 13, wherein less than five voice samples are accumulated in an offline accumulation phase during which the initial buffer capacity is filled.

15. The method according to any of claims 9 to 14, wherein a jitter of the voice signal transmission is measured, and wherein the switchover is completed when, in case the jitter measured is below a predefined threshold value, the initial buffer capacity of the voice data buffer has been filled and, in case the jitter measured is above the predefined threshold value, the overall buffer capacity of the voice data buffer has been filled.

## Patentansprüche

1. Flugsicherungssystem mit verbesserten Umschaltungsmerkmalen wobei das Flugsicherungssystem (10) mindestens zwei Flugsicherungsfunkvorrichtungen (12, 14) umfasst, wobei die mindestens zwei Flugsicherungsfunkvorrichtungen (12, 14) eine Hauptfunkvorrichtung (12) und eine Reservefunkvorrichtung (14) umfassen, derart, dass die mindestens zwei Flugsicherungsfunkvorrichtungen (12, 14) eine Ausfallsicherungsgruppe (26) aufbauen, und wobei das Flugsicherungssystem (10) einen Sprachdatenpuffer (28) umfasst, der konfiguriert ist, um Daten, die empfangenen Sprachsignalen zugeordnet sind, zu puffern, **dadurch gekennzeichnet, dass** der Sprachdatenpuffer (28) eine Gesamtpufferkapazität und eine initiale Pufferkapazität aufweist, die ein Teil der Gesamtpufferkapazität ist, wobei das Flugsicherungssystem (10) konfiguriert ist, um im Falle eines Ausfalls der Hauptfunkvorrichtung (12) eine Umschaltung von der Hauptfunkvorrichtung (12) zu der Reservefunkvorrichtung (14) einzuleiten, und wobei die Umschaltung von der Hauptfunkvorrichtung (12) zu der Reservefunkvorrichtung (14) abgeschlossen ist, wenn die initiale Pufferkapazität des Sprachdatenpuffers (28) gefüllt ist.

2. Flugsicherungssystem nach Anspruch 1, wobei das Flugsicherungssystem (10) konfiguriert ist, um die initiale Pufferkapazität individuell einzustellen.

3. Flugsicherungssystem nach Anspruch 1 oder 2, wobei das Flugsicherungssystem (10) konfiguriert ist, um nach Abschluss der Umschaltung eine verbleibende Pufferkapazität zu füllen.

4. Flugsicherungssystem nach Anspruch 3, wobei das Flugsicherungssystem (10) konfiguriert ist, um die verbleibende Pufferkapazität während einer Stille zu füllen.

5. Flugsicherungssystem nach einem der vorstehenden Ansprüche, wobei das Flugsicherungssystem (10) konfiguriert ist, um den Sprachdatenpuffer (28) in seinem Zustand verbleiben zu lassen, nachdem die initiale Pufferkapazität des Sprachdatenpuffers (28) gefüllt wurde.

6. Flugsicherungssystem nach einem der vorstehenden Ansprüche, wobei das Flugsicherungssystem (10) konfiguriert ist, um weniger als fünf Stimmabtastungen in einer Offline-Akkumulationsphase zu akkumulieren, während der die initiale Pufferkapazität gefüllt wird.

7. Flugsicherungssystem nach einem der vorstehenden Ansprüche, wobei jede der Flugsicherungsfunkvorrichtungen (12, 14) einen Sprachdatenpuffer (28) umfasst.

8. Flugsicherungssystem nach einem der vorstehenden Ansprüche, wobei eine Synchronisationsverbindung (16) zwischen den mindestens zwei Flugsicherungsfunkvorrichtungen (12, 14) zum Weiterleiten von Synchronisationsdaten von der Hauptfunkvorrichtung (12) zu der Reservefunkvorrichtung (14) aufgebaut ist, insbesondere wobei die Synchronisationsdaten Metadaten entsprechen, die synchronisiert sind, z. B. Paketen für Session Initiation Protocol (SIP) und/oder Paketen für Real-Time Transport Protocol (RTP).

9. Verfahren zum Durchführen einer Umschaltung zwischen mindestens zwei Flugsicherungsfunkvorrichtungen (12, 14) einer Ausfallsicherungsgruppe (26) im Falle des Ausfalls durch Verwenden eines Flugsicherungssystems (10), wobei das Verfahren die Schritte umfasst:
- Einleiten einer Umschaltung von einer Hauptfunkvorrichtung (12) zu einer Reservefunkvorrichtung (14) im Falle des Ausfalls der Hauptfunkvorrichtung (12),
- Füllen eines Sprachdatenpuffers (28) mit Sprachdaten bis zu einer initialen Pufferkapazität, die ein Teil einer Gesamtpufferkapazität des Sprachdatenpuffers (28) ist, und
- Abschließen der Umschaltung, wenn die initiale Pufferkapazität des Sprachdatenpuffers (28) gefüllt wurde.

10. Verfahren nach Anspruch 9, wobei eine verbleibende Pufferkapazität des Sprachdatenpuffers (28) nach dem Abschluss der Umschaltung gefüllt wird, wenn Sprachsignale über die Reservefunkvorrichtung (14) empfangen werden.

11. Verfahren nach Anspruch 9 oder 10, wobei die verbleibende Pufferkapazität während der Stille gefüllt wird.

12. Verfahren nach einem der Ansprüche 9 bis 11, wobei der Sprachdatenpuffer (28) in seinem Zustand verbleibt, nachdem die initiale Pufferkapazität des Sprachdatenpuffers (28) gefüllt wurde.

13. Verfahren nach einem der Ansprüche 9 bis 12, wobei die initiale Pufferkapazität durch einen Bediener des Flugsicherungssystems (10) individuell eingestellt wird.

14. Verfahren nach einem der Ansprüche 9 bis 13, wobei weniger als fünf Sprachabtastungen in einer Offline-Akkumulationsphase akkumuliert werden, während der die initiale Pufferkapazität gefüllt wird.

15. Verfahren nach einem der Ansprüche 9 bis 14, wobei ein Jitter der Sprachsignalübertragung gemessen wird, und wobei die Umschaltung abgeschlossen ist, wenn, im Falle, dass der gemessene Jitter unter einem zuvor definierten Schwellenwert liegt, die initiale Pufferkapazität des Sprachdatenpuffers gefüllt wurde, und im Falle, dass der gemessene Jitter über dem zuvor definierten Schwellenwert liegt, die Gesamtpufferkapazität des Sprachdatenpuffers gefüllt wurde.

## Revendications

1. Système de régulation de trafic aérien avec des caractéristiques de commutation améliorées, dans lequel le système de régulation de trafic aérien (10) comprend au moins deux radios de contrôle de trafic aérien (12, 14), dans lequel les au moins deux radios de contrôle de trafic aérien (12, 14) comprennent une radio principale (12) et une radio de secours (14) de telle sorte que les au moins deux radios de contrôle de trafic aérien (12, 14) établissent un groupe de basculement (26), et dans lequel le système de régulation de trafic aérien (10) comprend un tampon de données vocales (28) qui est configuré pour mettre en tampon des données associées à des signaux vocaux reçus, **caractérisé en ce que** le tampon de données vocales (28) a une capacité de tampon globale et une capacité de tampon initiale étant une partie de la capacité de tampon globale, dans lequel le système de régulation de trafic aérien (10) est configuré pour lancer une commutation depuis la radio principale (12) vers la radio de secours (14) en cas de défaillance de la radio principale (12), et dans lequel la commutation depuis la radio principale (12) vers la radio de secours (14) est achevée lorsque la capacité de tampon initiale du tampon de données vocales (28) est remplie.

2. Système de régulation de trafic aérien selon la revendication 1, dans lequel le système de régulation de trafic aérien (10) est configuré pour définir individuellement la capacité de tampon initiale.

3. Système de régulation de trafic aérien selon la revendication 1 ou 2, dans lequel le système de régulation de trafic aérien (10) est configuré pour remplir une capacité de tampon restante après l'achèvement de la commutation.

4. Système de régulation de trafic aérien selon la revendication 3, dans lequel le système de régulation de trafic aérien (10) est configuré pour remplir la capacité de tampon restante pendant un silence.

5. Système de régulation de trafic aérien selon l'une quelconque des revendications précédentes, dans lequel le système de régulation de trafic aérien (10) est configuré pour rester le tampon de données vocales (28) dans son état après que la capacité de tampon initiale du tampon de données vocales (28) a été remplie.

6. Système de régulation de trafic aérien selon l'une quelconque des revendications précédentes, dans lequel le système de régulation de trafic aérien (10) est configuré pour accumuler moins de cinq échantillons vocaux dans une phase d'accumulation hors ligne pendant laquelle la capacité de tampon initiale est remplie.

7. Système de régulation de trafic aérien selon l'une quelconque des revendications précédentes, dans lequel chacune des radios de contrôle de trafic aérien (12, 14) comprend un tampon de données vocales (28).

8. Système de régulation de trafic aérien selon l'une quelconque des revendications précédentes, dans lequel une liaison de synchronisation (16) est établie entre les au moins deux radios de contrôle de trafic aérien (12, 14) pour acheminer des données de synchronisation de la radio principale (12) à la radio de secours (14), en particulier dans lequel les données de synchronisation correspondent à des métadonnées qui sont synchronisées, par exemple des paquets de protocole d'ouverture de session (SIP) et/ou des paquets de protocole de transport en temps réel (RTP).

9. Procédé de réalisation d'une commutation entre au moins deux radios de contrôle de trafic aérien (12, 14) d'un groupe de basculement (26) en cas de défaillance en utilisant un système de régulation de trafic aérien (10), le procédé comprenant les étapes de :
- lancement d'un basculement depuis une radio principale (12) vers une radio de secours (14) en cas de défaillance de la radio principale (12),
- remplissage d'un tampon de données vocales (28) avec des données vocales jusqu'à une capacité de tampon initiale qui est une partie d'une capacité de tampon globale du tampon de données vocales (28), et
- achèvement de la commutation lorsque la capacité de tampon initiale du tampon de données voix (28) a été remplie.

10. Procédé selon la revendication 9, dans lequel une capacité de tampon restante du tampon de données vocales (28) est remplie après l'achèvement de la commutation lors de la réception de signaux vocaux par le biais de la radio de secours (14).

11. Procédé selon la revendication 9 ou 10, dans lequel la capacité de tampon restante est remplie pendant un silence.

12. Procédé selon l'une quelconque des revendications 9 à 11, dans lequel le tampon de données vocales (28) reste dans son état après que la capacité de tampon initiale du tampon de données vocales (28) a été remplie.

13. Procédé selon l'une quelconque des revendications 9 à 12, dans lequel la capacité de tampon initiale est définie individuellement par un opérateur du système de régulation de trafic aérien (10).

14. Procédé selon l'une quelconque des revendications 9 à 13, dans lequel moins de cinq échantillons vocaux sont accumulés dans une phase d'accumulation hors ligne pendant laquelle la capacité de tampon initiale est remplie.

15. Procédé selon l'une quelconque des revendications 9 à 14, dans lequel une gigue de la transmission de signal vocal est mesurée, et dans lequel la commutation est achevée lorsque, dans le cas où la gigue mesurée est inférieure à une valeur seuil prédéfinie, la capacité de tampon initiale du tampon de données vocales a été remplie et, dans le cas où la gigue mesurée est supérieure à la valeur seuil prédéfinie, la capacité de tampon globale du tampon de données vocales a été remplie.
